# EUROPÄISCHE PATENTANMELDUNG

(11) **EP 4 729 258 A1**
(43) Veröffentlichungstag der Anmeldung: **22.04.2026**
(21) Anmeldenummer: 25208928.9
(22) Anmeldetag: 15.10.2025
(51) Int. Cl.: B27B 5/20, B27G 19/02, B23D 45/02

(54) **SÄGEEINRICHTUNG, SÄGESTATION UND RIEGELWERKSTATION SOWIE VERWENDUNG EINER SÄGEEINRICHTUNG UND VERFAHREN ZUM BETREIBEN EINER SÄGEEINRICHTUNG**

(30) Priorität: 21.10.2024 DE 102024130584
(71) Anmelder: Weinmann Holzbausystemtechnik GmbH, 72813 St. Johann (DE)
(72) Erfinder: Krämer, Alexander, 72461 Albstadt (DE); Goller, Michael, 72525 Münsingen (DE); Raach, Oliver, 72760 Reutlingen (DE); Geysel, Frank, 72539 Pfronstetten (DE)
(74) Vertreter: Dürr - Corporate IP

(57) **Zusammenfassung**

Die Erfindung betrifft eine Sägeeinrichtung zum Aufteilen eines Werkstücks, insbesondere eines Holzwerkstücks, aufweisend ein Sägeblatt, eine erste Antriebseinheit um das Sägeblatt in Rotation zu versetzen, insbesondere einen ersten Elektromotor, und eine Schutzvorrichtung, wobei die Schutzvorrichtung zumindest abschnittsweise derart um den Umfang des Sägeblatts angeordnet ist, dass ein sich neben der Sägeeinrichtung befindender Bediener vor dem rotierenden Sägeblatt schützbar ist, wobei die Schutzvorrichtung einen beweglichen Teil umfasst, wobei der bewegliche Teil derart um den Drehpunkt des Sägeblatts schwenkbar angeordnet ist, dass durch das Einführen des Werkstücks in die Sägeeinrichtung für einen Aufteilvorgang der bewegliche Teil derart verschwenkt wird, so dass ein Angreifen des rotierenden Sägeblatts am Werkstück ermöglicht wird.

Mit der erfindungsgemäßen Messvorrichtung kann eine für einen Bediener sichere Nutzung der Säge gewährleistet werden.

## Beschreibung

Die Erfindung betrifft eine Sägeeinrichtung zum Aufteilen eines Werkstücks nach dem Oberbegriff von Anspruch 1, sowie eine Sägestation und eine Riegelwerkstation. Des Weiteren betrifft die Erfindung die Verwendung einer entsprechenden Sägeeinrichtung und ein Verfahren zum Betreiben einer Sägeeinrichtung.

Im Holzhausbau werden immer häufiger individuelle Anfertigungen von Hausgrundrisse entworfen, welche eine Verbindung der Wände in einem Winkel ungleich 90° aufweisen. Hierfür werden die entsprechenden Holzwerkstücke aktuell händisch mit einer Sägeeinrichtung im entsprechenden Winkel gekürzt. Die im Markt bekannten Sägeeinrichtungen weisen zum Schutz eines Bedieners Umhausungen auf, wobei die Umhausungen nicht in jeder Winkellage des Sägeblattes einen Schutz für den Bediener gewähren. Zudem sind diese Umhausungen derart gestaltet, dass diese nicht in eine Sägestation oder eine Riegelwerkstation integriert werden können.

Es ist daher eine Aufgabe der vorliegenden Erfindung eine verbesserte Sägeeinrichtung, insbesondere eine Sägeeinrichtung mit einer verbesserten Schutzvorrichtung, bereitzustellen.

Diese Aufgabe wird durch den Gegenstand des unabhängigen Patentanspruch 1 gelöst. Bevorzugte Ausführungsformen sind Gegenstand der abhängigen Patentansprüche.

Eine weitere Idee der vorliegenden Erfindung ist eine verbesserte Sägestation, insbesondere eine Sägestation mit einer schwenkbaren Sägeeinrichtung, bereitzustellen.

Diese Aufgabe wird durch den Gegenstand des unabhängigen Patentanspruch 7 gelöst. Bevorzugte Ausführungsformen sind Gegenstand des abhängigen Anspruchs.

Eine weitere Idee der vorliegenden Erfindung ist eine verbesserte Riegelwerkstation bereitzustellen. Diese Aufgabe wird durch den Gegenstand des unabhängigen Patentanspruch 9 gelöst. Bevorzugte Ausführungsformen sind Gegenstand des abhängigen Anspruchs.

Eine weitere Idee der vorliegenden Erfindung ist eine verbesserte Verwendung einer Sägeeinrichtung bereitzustellen. Insbesondere soll eine Verwendung vorgeschlagen werden, bei der der Bediener einen Bearbeitungsvorgang startet, indem der Bediener mindestens zwei Zweihandaktivierungstasten betätigt. Diese Aufgabe wird durch den Gegenstand des unabhängigen Patentanspruch 12 gelöst.

Eine weitere Idee der vorliegenden Erfindung ist ein verbessertes Verfahren oder zumindest ein alternatives Verfahren zum Betreiben einer Sägeeinrichtung bereitzustellen. Insbesondere soll ein Verfahren vorgeschlagen werden, bei welchem eine Riegelwerkstation in Abhängigkeit eines Sägeplans betrieben wird.

Diese Aufgabe wird durch den Gegenstand des unabhängigen Patentanspruchs 13 gelöst. Bevorzugte Ausführungsformen sind Gegenstand der abhängigen Ansprüche.

Grundidee der Erfindung ist demnach, eine Sägeeinrichtung zum Aufteilen eines Werkstücks, insbesondere eines Holzwerkstücks, aufweisend ein Sägeblatt, eine erste Antriebseinheit, um das Sägeblatt in Rotation zu versetzen, insbesondere einen ersten Elektromotor, und eine Schutzvorrichtung, wobei die Schutzvorrichtung zumindest abschnittsweise derart um den Umfang des Sägeblatts angeordnet ist, dass ein sich neben der Sägeeinrichtung befindender Bediener vor dem rotierenden Sägeblatt schützbar ist, wobei die Schutzvorrichtung einen beweglichen Teil umfasst, wobei der bewegliche Teil derart um den Drehpunkt des Sägeblatts schwenkbar angeordnet ist, dass durch das Einführen des Werkstücks in die Sägeeinrichtung für einen Aufteilvorgang der bewegliche Teil derart verschwenkt wird, so dass ein Angreifen des rotierenden Sägeblatts am Werkstück ermöglicht wird. Hiermit kann ein sicherer Betrieb einer Sägeeinrichtung für einen Bediener ermöglicht werden.

In einer bevorzugten Ausgestaltung ist die erste Antriebseinheit als ein erster Elektromotor ausgebildet. Durch die Ausgestaltung der ersten Antriebseinheit in Form eines Elektromotors kann das Sägeblatt der Sägeeinrichtung nicht nur angetrieben, sondern auch abgebremst werden.

Unter einer Schutzvorrichtung im Sinne der Erfindung wird eine Vorrichtung verstanden, welche zumindest abschnittsweise um das Sägeblatt herum angeordnet ist, so dass ein Bediener vor dem sich drehenden Sägeblatt vor Verletzungen geschützt ist.

Gemäß einer bevorzugten Ausführungsform weist die Schutzvorrichtung ein feststehendes Gehäuse auf, wobei der bewegliche Teil zumindest abschnittsweise um das feststehende Gehäuse oder zwischen dem Sägeblatt und dem feststehenden Gehäuse schwenkbar angeordnet ist, insbesondere entgegen der Drehrichtung des Sägeblatts schwenkbar ist.

Durch das abschnittsweise Wegschwenken des beweglichen Teils um die Schutzvorrichtung wird eine kompaktbauende Schutzvorrichtung für eine Sägeeinrichtung bereitgestellt. Zudem kann sichergestellt werden, dass nur der Teil des Sägeblatts für eine Bearbeitung eines Werkstücks von der Schutzvorrichtung freigegeben wird, welcher auch für die Bearbeitung notwendig ist. Hierdurch wird die Verletzungsgefahr für einen Bediener reduziert.

In einer besonders bevorzugten Ausgestaltung weist die Sägeeinrichtung einen Sensor auf, um die Schwenkung des beweglichen Teils zu überwachen, wobei vorzugsweise der Endlagepunkte des ausgefahrenen beweglichen Teils überwacht wird. Hierdurch ist es möglich, dass nach einem Bearbeitungsvorgangs der bewegliche Teil wieder vom feststehenden Gehäuse wegschwenkt und beim Erreichen des Endlagepunkts das Sägeblatt durch den Elektromotor abgebremst wird. Hiermit wird die Sicherheit für einen Bediener weiter erhöht.

Gemäß einer weiteren bevorzugten Ausführungsform weist der bewegliche Teil einen Anschlag auf, und ist derart in der Sägeeinrichtung angeordnet, dass der Anschlag an einem zu bearbeitenden Werkstück in Anlage kommt, wenn das Werkstück in die Sägeeinrichtung eingebracht wird, wobei der bewegliche Teil durch das Werkstück derart bewegbar ist, dass das Sägeblatt für einen Aufteilvorgang freigegeben wird. Durch die Freigabe des Sägeblatts nur in dem Umfang in welchem das Sägeblatt am Werkstück anliegt, wird die Sicherheit für einen Bediener weiter erhöht.

Gemäß einer weiteren bevorzugten Ausführungsform ist der Anschlag als Kunststoffrolle ausgeführt, wobei die Kunststoffrolle drehbar gelagert am beweglichen Teil derart angeordnet ist, dass ein in die Sägeeinrichtung eingebrachtes Werkstück an der Kunststoffrolle anliegt und daran entlang führbar ist, wobei das Einbringen des Werkstücks vorzugsweise in einer Hauptförderrichtung des zu bearbeitenden Werkstücks erfolgt, wobei die Kunststoffrolle aus einem vordefinierten elastischen Material besteht, dass ein gleichmäßiges Bewegen des beweglichen Teils realisiert wird, wobei die Kunststoffrolle derart ausgeformt, insbesondere auf beiden Seiten derart abgerundet, ist, dass die Kunststoffrolle bei allen Winkellagen des Sägeblatts am Werkstück anliegt.

Durch die Ausführung des Anschlags aus einem elastischen Material ist es möglich die Schutzvorrichtung gezielt auf die Konturen des Werkstücks anzupassen. Hiermit kann ein bestmöglicher Schutz für einen Bediener gewährleistet werden.

In einer bevorzugten Ausgestaltung ist die Kunststoffrolle aus Polyoxymethylen ausgebildet. Durch die Ausbildung der Kunststoffrolle aus Polyoxymethylen kann eine einfach herzustellendes und günstiges Kunststoffrolle bereitgestellt werden, welche derart elastisch ist, dass sich diese an die Werkstückoberfläche anlegt, ohne die Werkstückoberfläche zudem zu beschädigen.

Gemäß einer weiteren bevorzugten Ausführungsform weist die Schutzvorrichtung eine Feder auf, wobei die Feder den beweglichen Teil gegen ein zu bearbeitendes Werkstück drückt und am Drehpunkt des beweglichen Teils angeordnet ist.

Hiermit kann gewährleistet werden, dass die Schutzvorrichtung der Sägeeinrichtung immer am zu bearbeitenden Werkstück anliegt und folglich den größtmöglichen Schutzbereich gewährleistet.

In einer bevorzugten Ausgestaltung ist die Feder als Torsionsfeder ausgebildet. Hierdurch lässt sich die Feder platzsparend in die Sägeeinrichtung integrieren, womit eine kompakt bauende Sägeeinrichtung bereitgestellt werden kann.

Gemäß einer weiteren bevorzugten Ausführungsform weist der bewegliche Teil eine Hilfseinrichtung auf, wobei die Hilfseinrichtung die Bewegung des beweglichen Teils unterstützt.

Durch die Unterstützung der Bewegung mit Hilfe der Hilfseinrichtung wird die Anpresskraft des beweglichen Teils auf das Werkstück verringert, womit die Gefahr von Beschädigungen an der Werkstückoberfläche reduziert werden.

Unter einer Hilfseinrichtung im Sinne der Erfindung wird jede Art von Einrichtung verstanden, welche die Bewegung des beweglichen Teils unterstützt. Vorzugsweise kann hierunter ein direkter oder indirekter Antrieb verstanden werden. In einer besonders bevorzugten Ausgestaltung umfasst die Hilfseinrichtung ein Seil und eine Aufwickeleinheit, wobei die Aufwickeleinheit vorzugsweise federvorgespannt ist. Hiermit kann eine technisch einfache und wartungsarme Hilfseinrichtung bereitgestellt werden.

Gemäß einer weiteren bevorzugten Ausführungsform ist das Sägeblatt in einer ersten Richtung verlagerbar, wobei die erste Richtung orthogonal zu einer Sägelinie in einer Hochachse und orthogonal zu einer Hauptförderrichtung des zu bearbeitenden Werkstücks ist.

Die erste Richtung entspricht daher einer Hochachse der Sägeeinrichtung, wobei das Sägeblatt in dieser Hochachse zum Auflagetisch des zu bearbeitenden Werkstücks verlagerbar ist. Hiermit kann gewährleistet werden, dass verschieden große Werkstücke mit der Sägeeinrichtung bearbeitet werden können.

Gemäß einer weiteren bevorzugten Ausführungsform weist die Sägeeinrichtung eine Führungseinheit zum Verlagern des Sägeblatts auf, wobei die Führungseinheit einen ersten Stellantrieb, insbesondere einen ersten Elektrostellmotor, zum Verlagern des Sägeblatts aufweist.

Durch das Vorsehen einer Führungseinheit mit einem ersten Stellantrieb wird der Bediener beim Verlagern des Sägeblatts zumindest unterstützt. Hiermit kann eine einfache Bedienung der Sägeeinrichtung sichergestellt werden.

Gemäß einer weiteren bevorzugten Ausführungsform umfasst die Sägeeinrichtung eine Steuereinheit, die den ersten Stellantrieb derart ansteuert, dass die Verlagerung des Sägeblatts erfolgt, wobei insbesondere die Steuereinheit in Abhängigkeit eines Schnittplans den ersten Stellantrieb ansteuert, um das Sägeblatt zu positionieren und zu bewegen.

Durch das Vorsehen einer Steuereinheit kann ein zumindest teilautonomer Prozess zur Bearbeitung von Werkstücken bereitgestellt werden. Die Steuereinheit kann hierfür vorzugsweise im Bereich der Sägeeinrichtung angeordnet sein. Hierdurch ist es möglich, dass der Bediener auf Parameter in der Steuereinheit in Abhängigkeit des Schnittbildes der Sägeeinrichtung vornehmen kann. In einer weiteren bevorzugten Ausführung kann die Sägeeinrichtung eine Überwachungseinrichtung aufweisen, um das Schnittbild am Werkstück zu analysieren. Die Überwachungseinrichtung ist vorzugsweise eine Kamera, welche die Schnittkante des Werkstücks aufnimmt, wobei die Steuereinheit die gemessenen Aufnahmen auswertet, und ein Signal ausgibt, sofern das Schnittbild nicht mehr den geforderten Qualitätsangaben entspricht. Das Signal zeigt dem Bediener an, dass Wartungsarbeiten, insbesondere der Austausch des Sägeblatts, an der Sägeeinrichtung durchgeführt werden müssen. Durch die Integration einer Überwachungseinrichtung in die Sägeeinrichtung kann in Kombination mit der Steuereinheit eine Sägeeinrichtung bereitgestellt werden, bei welcher der Anteil an Ausschussteilen zumindest reduziert wird.

Gemäß einer weiteren bevorzugten Ausführungsform weist die Sägeeinrichtung eine Schwenkeinheit auf, wobei die Schwenkeinheit derart eingerichtet ist, dass das Sägeblatt in einem Winkelbereich von ±85°, insbesondere ±65°, in Bezug zur ersten Richtung in Richtung der Hauptförderrichtung oder in Richtung der Sägelinie schwenkbar ist, wobei insbesondere die Schwenkeinheit für einen Aufteilvorgang arretierbar ist.

Hierdurch ist es möglich Werkstücke nicht nur im nahezu 90° Winkel zu bearbeiten, sondern in einem vorgegebenen Winkel zu bearbeiten. Hierdurch können in einem nachgelagerten Bearbeitungsschritt Verbindungen der bearbeiteten Werkstücke in einem nicht rechtwinkeligen Winkel bereitgestellt werden. Insbesondere beim Holzhausbau wird hierdurch der Gestaltungsspielraum der Grundrisse, beispielsweise durch Mehreckerker, erweitert.

Gemäß einer weiteren bevorzugten Ausführungsform weist die Schutzvorrichtung ein Schutzblech auf, wobei das Schutzblech gegenüber dem freiliegenden Teil des Sägeblatts angeordnet ist, wobei das Schutzbleich derart an der Sägeeinrichtung, insbesondere an der Schwenkeinheit, angeordnet ist, dass zwischen dem Schutzblech und dem Sägeblatt das zu bearbeitende Werkstück positionierbar ist, wobei das Schutzblech bei einer Verlagerung und/oder Schwenkung des Sägeblatts mit verlagert und/oder mit geschwenkt wird.

Unter einem Schutzblech wird eine weitere Schutzvorrichtung verstanden, welche einen Bediener beim Betrieb der Sägeeinrichtung vor dem Sägeblatt schützen soll. Das Schutzblech kann vorzugsweise demontierbar an der Sägeeinrichtung angeordnet sein. Hiermit kann bei Wartungsarbeiten der Zugang zum Sägeblatt vereinfacht werden.

Die Erfindung betrifft des Weiteren eine Sägestation aufweisend eine Sägeeinrichtung und einen Sägetisch mit einer Auflagefläche, auf welchen ein zu bearbeitendes Werkstück auflegbar ist, wobei die Auflagefläche eine Aussparung aufweist, wobei die Aussparung derart ausgestaltet ist, dass ein Sägeblatt der Sägeeinrichtung in einem Winkelbereich von ±85°, vorzugsweise ±65°, in Bezug zu einer ersten Richtung, die orthogonal zu einer Sägelinie in einer Hochachse und orthogonal zu einer Hauptförderrichtung des zu bearbeitenden Werkstücks ist, in der Aussparung verlagerbar ist.

Hierdurch kann eine Sägestation bereitgestellt werden, welche Werkstücke in einem Winkel bearbeitet, insbesondere in einen entsprechenden Winkel kürzt. Hiermit können Stoßkanten für Werkstücke bereitgestellt werden, welche einen Winkel zu einer Hauptfläche des Werkstücks aufweisen, der ungleich 90° ist. Hiermit kann der Gestaltungspielraum von Verbindungen der Werkstücke erhöht werden. Insbesondere beim Holzhausbau kann hiermit ein Tragbalken bereitgestellt werden, welcher mit einem weiteren Tragbalken in einem gewünschten und vorgegebenen Winkel verbunden werden kann. Hiermit lassen sich insbesondere winkelig zueinanderstehende Wandelemente realisieren, womit der Gestaltungsspielraum beim Holzhausbau deutlich erhöht wird.

Vorzugsweise ist die Sägeeinrichtung nach einem der vorher beschriebenen Ausführungsformen ausgebildet.

Gemäß einer bevorzugten Ausführungsform umfasst die Sägestation ein Sägeblatt, eine Steuereinheit und einen Stellantrieb, wobei die Steuereinheit den ersten Stellantrieb derart ansteuert, dass eine Verlagerung des Sägeblatts in der ersten Richtung erfolgt, wobei insbesondere die Steuereinheit in Abhängigkeit eines Schnittplans den ersten Stellantrieb ansteuert, um das Sägeblatt zu positionieren und zu bewegen.

Hierdurch kann eine zumindest teilautomatisch arbeitende Sägestation bereitgestellt werden.

Des Weiteren betrifft die Erfindung eine Riegelwerkstation zur Herstellung einer Tragstruktur für Gebäudewände aus Werkstücken, insbesondere aus Holzwerkstücken, aufweisend einen Zuführtisch, eine Sägestation, eine Entnahmetisch und eine Befestigungseinheit und eine Steuereinheit, wobei die Sägestation in einer Werkstückförderrichtung derart zwischen dem Zuführtisch und dem Entnahmetisch im Bereich der Befestigungseinheit angeordnet ist, dass ein Werkstück mittels der Sägestation für die herzustellende Tragstruktur aufteilbar, insbesondere kürzbar, ist und mittels der Befestigungseinheit an der Tragstruktur befestigbar ist.

Vorzugsweise sind dem Zuführtisch und dem Entnahmetisch jeweils eine Fördereinrichtung zugeordnet. Durch die Anordnung der Sägeeinrichtung zwischen einer ersten Fördereinrichtung des Zuführtisches und einer weiteren Fördereinrichtung des Entnahmetisches kann eine zumindest teilautomatische Einund Ausführung eines Werkstücks bereitgestellt werden.

Vorzugsweise ist die Sägestation nach einem der vorherigen Ausführungen ausgebildet. Besonders bevorzugt sind die Fördereinrichtungen als Kettenförderer ausgestaltet, wobei die einzelnen Kettensegmente vorzugsweise aus einem Kunststoff bestehen oder eine anbringbare Kunststoffoberfläche aufweisen. Hierdurch können Schäden an den Werkstücken vermieden oder zumindest reduziert werden.

Gemäß einer weiteren bevorzugten Ausführungsform der Riegelwerkstation weist die erste Fördereinrichtung zwei Fördersegmente auf, um zwei Werkstücke zumindest nahezu parallel zueinander zur Sägestation zu befördern, wobei die Sägestation zwei Sägeeinrichtungen aufweist, wobei die Sägeeinrichtungen an oder zumindest derart im Bereich der Fördersegmente angeordnet sind, dass eine Bearbeitung der zwei Werkstücke durchführbar ist, wobei die Sägeeinrichtungen von der Steuereinheit derart ansteuerbar sind, dass eine Bearbeitung der beiden Werkstücke zumindest nahezu zeitgleich erfolgt.

Vorzugsweise sind die zwei Werkstücke Holzwerkstücke und dienen als Tragstrukturbalken einer herzustellenden Tragstruktur einer Gebäudewand, wobei die Riegelwerkstation in Werkstückförderrichtung nach der Sägestation eine Zwischenbalkenzuführ- und Ausrichtvorrichtung für Zwischenbalken aufweist, wobei die Zwischenbalken zwischen einem oberen Tragstrukturbalken und einem unteren Tragstrukturbalken in einem definierten Abstand zueinander ausgerichtet werden, wobei die Riegelwerkstation eine Befestigungseinheit aufweist, um die Zwischenbalken mit den Tragstrukturbalken zu verbinden.

Hierdurch kann eine Riegelwerkstation bereitgestellt werden, mit welcher Tragstrukturen für Gebäudewände mit individuellen Maßangaben gefertigt werden können.

Gemäß einer weiteren bevorzugten Ausführungsform der Riegelwerkstation umfasst die Sägestation ein Sägeblatt und einen Stellantrieb, wobei die Steuereinheit den ersten Stellantrieb derart ansteuert, dass eine Verlagerung des Sägeblatts in einer ersten Richtung erfolgt, wobei die erste Richtung orthogonal zu einer Sägelinie der Riegelwerkstation in einer Hochachse und orthogonal zu einer Hauptförderrichtung des zu bearbeitenden Werkstücks ist, wobei insbesondere die Steuereinheit in Abhängigkeit eines Schnittplans den ersten Stellantrieb ansteuert, um das Sägeblatt zu positionieren und zu bewegen, Hierdurch kann eine zumindest teilautomatisch arbeitende Riegelwerkstation bereitgestellt werden, welche insbesondere einen vordefinierten Schnittplan abarbeitet. Hiermit kann ein Bediener bei der Abarbeitung eines Schnittplans zumindest unterstützt werden.

Die Erfindung betrifft auch die Verwendung einer Sägeeinrichtung, wobei ein Bediener einen Sägeplan für ein zu bearbeitendes Werkstück in eine Steuereinheit einliest, mittels der Steuereinheit erstellt und/oder mittels der Steuereinheit auswählt und anschließend an der Sägeeinrichtung einen Bearbeitungsvorgang startet, indem der Bediener mindestens zwei Aktivierungstasten, insbesondere zwei Zweihandaktivierungstasten, betätigt, wobei die Aktivierungstasten während des Bearbeitungsvorgangs betätigt bleiben müssen.

Unter einer Verwendung der Sägeeinrichtung wird ein Einschalten und Betreiben der Sägeeinrichtung verstanden. Durch die Ausgestaltung der Aktivierungstasten in Form von zwei separaten Aktivierungstasten, wird eine erhöhte Sicherheit im Betrieb der Sägeeinrichtung gewährleistet, da die Gefahr eines versehentlichen Einschaltens der Sägeeinrichtung durch Betätigen von mindestens zwei Tasten zumindest minimiert werden kann. Durch die Ausgestaltung der Aktivierungstasten als Zweihandaktivierungstasten wird ein besonderer Schutz für die Hände des Bedieners gewährleistet. Hiermit kann ein sicherer Umgang mit der Sägeeinrichtung weiter erhöht werden.

Vorzugsweise ist die Sägeeinrichtung nach einem der vorher beschriebenen Ausführungsformen ausgebildet.

Die Erfindung betrifft ferner auch ein Verfahren zum Betreiben einer Sägeeinrichtung aufweisend die folgenden Schritte. Versetzen eines Sägeblatts in Rotation zum Aufteilen eines Werkstücks, insbesondere eines Holzwerkstücks. Einführen des Werkstücks in die Sägeeinrichtung. Schwenken eines beweglichen Teils einer Schutzvorrichtung der Sägeeinrichtung durch das Einführen des Werkstücks um einen Drehpunkt des Sägeblatts, so dass das rotierende Sägeblatt für einen Aufteilvorgang an dem Werkstück angreifen kann.

In Ausführungsformen ist die Sägeeinrichtung Teil einer Riegelwerkstation. Hierdurch kann durch das Verfahren auch eine Riegelwerkstation betrieben werden.

Gemäß einer bevorzugten Ausführungsform des Verfahrens weist das Verfahren ferner folgende Schritte auf. Bereitstellen von Informationen zu den zu bearbeitenden Werkstücken in einer Steuereinheit. Erstellen eines Sägeplans in der Steuereinheit auf Basis der bereitgestellten Informationen. Starten der Sägeeinrichtung. Ansteuern der Sägeeinrichtung in Abhängigkeit des Sägeplans, wobei das Sägeblatt der Sägeeinrichtung in Abhängigkeit des Sägeplans um einen vorgegebenen Winkel in Bezug auf eine erste Richtung, die orthogonal zu einer Sägelinie der Sägeeinrichtung in einer Hochachse und orthogonal zu einer Hauptförderrichtung des zu bearbeitenden Werkstücks ist, teilautomatisch oder vollautomatisch verlagert und/oder geschwenkt wird.

Hierdurch wird ein Verfahren bereitgestellt, welches einen vorab von einem Bediener eingeplanten Sägeplan abarbeitet. Mit Hilfe eines teilautomatischen Schwenkens des Sägeblatts kann das Sägeblatt für einen Bediener in die entsprechende Winkellage verlagert werden, womit der Bediener das Sägeblatt in dieser Winkellage lediglich arretieren muss. Durch das vollautomatische Schwenken des Sägeblatts kann ein vollautomatischer Betrieb der Riegelwerkstation bereitgestellt werden. Damit ist es möglich einen 24h Betrieb der Station bereitzustellen, ohne dass ein Bediener für den Betrieb benötigt wird. Vorzugsweise ist die Riegelwerkstation und/oder die Sägeeinrichtung nach einem der vorher beschriebenen Ausführungsformen ausgebildet.

Gemäß einer weiteren bevorzugten Ausführungsform des Verfahrens wird die Schutzvorrichtung in Abhängigkeit einer Verlagerung und/oder einer Schwenkung des Sägeblatts mit dem Sägeblatt verlagert und/oder geschwenkt.

Durch die Nutzung einer Schutzvorrichtung an der Sägeeinrichtung kann ein Bediener vor dem im Betrieb befindlichen Sägeblatt sicher geschützt werden. Hierdurch ist es möglich, dass sich ein Bediener, während dem Betrieb der Sägeeinrichtung, innerhalb oder zumindest im Bereich der Riegelwerkstation aufhalten kann. Durch das Schwenken des Sägeblattes können die Werkstücke an den Endbereichen in einem entsprechenden Winkel gekürzt werden. Hierdurch kann eine große Gestaltungsfreiheit für Verbindungen von Werkstücken bereitgestellt werden. Durch das Mitschwenken und/oder verlagern der Schutzvorrichtung kann sichergestellt werden, dass bei jeder Einstellung des Sägeblatts der Bediener vor dem Sägeblatt geschützt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
Fig. 1 ein erstes Ausführungsbeispiel einer erfindungsgemäßen Sägeeinrichtung,
Fig. 2a eine erste Detailansicht einer erfindungsgemäßen Sägeeinrichtung,
Fig. 2b eine zweite Detailansicht einer erfindungsgemäßen Sägeeinrichtung,
Fig. 3 eine dritte Detailansicht einer geschwenkten erfindungsgemäßen Sägeeinrichtung,
Fig. 4 eine Bearbeitungsvorrichtung aufweisend eine erfindungsgemäße Sägeeinrichtung.

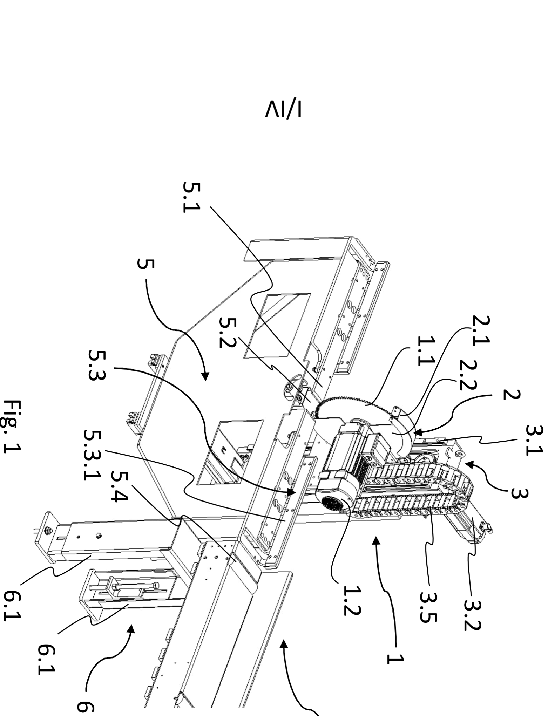

Die Fig. 1 bis Fig. 3 illustrieren in unterschiedlichen Darstellungsformen jeweils ein Ausführungsbeispiel einer erfindungsgemäßen Sägeeinrichtung.

In Fig. 1 ist ein erstes Ausführungsbeispiel einer erfindungsgemäßen Sägeeinrichtung 1 als Bestandteil einer Sägestation 4 dargestellt. Die Sägeeinrichtung 1 weist dabei ein Sägeblatt 1.1 und eine erste Antriebseinheit 1.2 auf. Die erste Antriebseinheit 1.2 wird von einer nicht dargestellten Steuereinheit angesteuert und vorzugsweise drehzahlgeregelt für den entsprechenden Anwendungsfall angetrieben. Vorzugsweise können mit der Sägeeinrichtung 1 Holzwerkstücke aufgeteilt, insbesondere gekürzt, werden. Je nach verwendetem Sägeblatt 1.1 kann die Sägeeinrichtung auch für andere Materialien, wie beispielsweise Metall, Kunststoffe und/oder Betonwerkstoffe eingesetzt werden.

Die Sägeeinrichtung 1 weist ferner eine Schutzvorrichtung 2 auf, welche sich um das Sägeblatt 1.1 herum erstreckt. Die Schutzvorrichtung 2 dient dazu einen Bediener, welcher sich im Bereich der Sägeeinrichtung 1 befindet, vor dem im Betrieb befindlichen Sägeblatt 1.1 zu schützen. Hierfür umfasst die Schutzvorrichtung 2 ein feststehendes Gehäuse 2.2 und einen beweglichen Teil 2.1. Das feststehende Gehäuse 2.2 erstreckt sich derart um einen Teil des Sägeblattes 1.1, dass das Sägeblatt 1.1 in Richtung eines Sägetisches 5 für ein nicht dargestelltes Werkstück zugänglich ist. Der bewegliche Teil 2.1 dient dazu den Teil des Sägeblattes, welcher durch das feststehende Gehäuse 2.2 nicht abgedeckt ist, im Bedarfsfall zu verdecken oder freizugeben. Hierfür kann der bewegliche Teil 2.1 um den Drehpunkt des Sägeblattes 1.1 geschwenkt werden. Der bewegliche Teil 2.1 kann, wie vorliegend in Fig.1 gezeigt, zumindest teilweise um das feststehende Gehäuse 2.2 geschwenkt werden. In einer alternativen nicht dargestellten Variante kann der bewegliche Teil 2.1 auch zwischen dem Sägeblatt 1.1 und dem feststehenden Gehäuse 2.2 weggeschwenkt werden, also innerhalb des feststehenden Gehäuse 2.2 verschwenkt werden. Das Schwenken des beweglichen Teils 2.1 erfolgt vorzugsweise entgegen der Drehrichtung des Sägeblatts 1.1. Der bewegliche Teil 2.1 wird für ein Freigeben des Sägeblattes 1.1 nur derart weit um das feststehende Gehäuse 2.2 geschwenkt, dass ein zu bearbeitenden Werkstück mit dem Sägeblatt 1.1 bearbeitet werden kann. Hiermit kann die Sicherheit für einen Bediener bestmöglich gewährleistet werden. Das Schwenken des beweglichen Teils 2.1 kann mit einer nicht dargestellten Hilfseinrichtung, beispielsweise einer Antriebseinrichtung, unterstützt werden.

Die Sägeeinrichtung 1 ist im Ausführungsbeispiel nach Fig. 1 Teil einer Sägestation 4. Die Sägestation 4 weist ferner einen Sägetisch 5 auf. Der Sägetisch 5 umfasst mindestens eine Auflagefläche 5.1 für ein zu sägendes Werkstück. Der Sägetisch umfasst zudem Förderrollen 5.4, welche aus der Auflagefläche 5.1 herausragen. Die Förderrollen 5.4 dienen dazu die Reibung zwischen dem Werkstück und der Auflagefläche 5.1 zumindest zu reduzieren, um die Gefahr einer Beschädigung am Werkstück zu minimieren. Damit das Werkstück positioniert der Sägeeinrichtung 1 zugeführt werden kann, weist der Sägetisch 5 ein Ausrichtelement 5.3 in Form eines Winkellineals auf. Das Ausrichteelement 5.3 weist eine Ausrichtfläche 5.3.1 auf, an welcher ein Werkstück für eine Positionierung angelegt werden kann. Die Auflagefläche 5.1 des Sägetisches 5 weist zudem Aussparungen 5.2 auf. Die Aussparungen sind derart gestaltet, dass das Sägeblatt 1.1 der Sägeeinrichtung 1 für einen Sägevorgang eingreifen kann und nicht in Kontakt mit der Auflagefläche 5.1 kommt. Hiermit kann gewährleistet werden, dass ein Werkstück vollständig aufgeteilt werden kann, ohne dass das Sägeblatt 1.1 oder der Auflagetisch 5.1 beschädigt werden. Der Sägetisch 5 weist ferner einen Stützrahmen 6 mit in der Höhe einstellbaren Stützfüßen 6.1 auf. Hiermit ist es möglich die Sägestation 4 in der Höhe für einen Bediener einzustellen. Ebenso kann durch die Höhenanpassung der Stützfüße 6.1 die Sägestation 4 zu einer weiteren Bearbeitungsvorrichtung derart eingestellt werden, dass eine stufenlose Übergabe eines Werkstücks von oder zu der weiteren Bearbeitungsvorrichtung zur oder von der Sägestation 4 möglich ist.

Die Sägeeinrichtung 1 nach Fig. 1 ist an einer Halterung 3 beweglich angeordnet. Die Halterung 3 weist für eine Verlagerung der Sägeeinrichtung 1 eine Führungseinheit 3.1 und einen ersten Stellantrieb 3.2 auf. Hiermit kann die Sägeeinrichtung in einer ersten Richtung verlagert werden. Die erste Richtung entspricht vorliegend einer Richtung orthogonal zur Sägelinie in einer Hochachse und orthogonal zu einer Hauptförderrichtung des zu bearbeitenden Werkstücks. Hiermit kann die Sägeeinrichtung relativ zur Auflagefläche 5.1 verlagert werden. Dadurch ist die Sägeeinrichtung 1 geeignet unterschiedlich dimensionierte Werkstücke, insbesondere unterschiedlich hohe Werkstücke, zu bearbeiten. Ferner weist die Halterung 3 eine Schwenkeinheit 3.3 und einen in Fig. 1 nicht dargestellten zweiten Stellantrieb 3.4 auf. Hiermit kann die Sägeeinrichtung 1 in der Vorschubrichtung des Werkstücks geschwenkt werden. Hiermit kann ein Sägeschnitt in einem Winkelbereich von ±85°, vorzugsweise ±65°, am Werkstück durchgeführt werden. Um die Bewegungsfreiheit der Sägeeinrichtung 1 gewährleisten zu können weist die Halterung einen Kabelführung 3.5 auf, welche mit der Führungseinheit 3.1 verfährt und mit der Schwenkeinheit 3.3 geschwenkt werden kann. Durch die Anordnung der Sägeeinrichtung 1 an der Halterung 3 kann eine besonders flexibel einsetzbare Sägeeinrichtung 1 bereitgestellt werden mit welcher Werkstücke unterschiedlicher Dimensionen bearbeitet werden können.

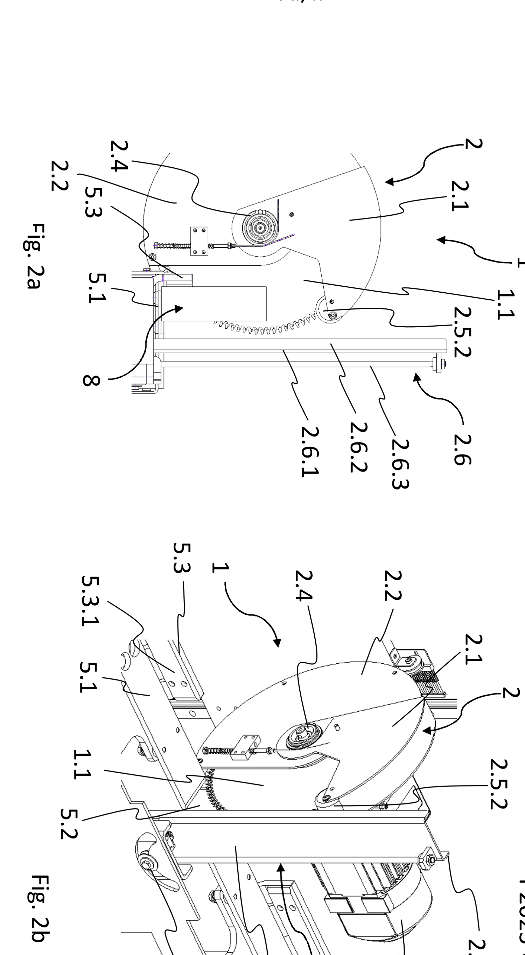

In den Fig. 2a und 2b ist eine erfindungsgemäße Sägeeinrichtung 1 jeweils in einer Detailansicht dargestellt. Die Ausführungsbeispiele nach Fig. 2a und 2b können, wie das Ausführungsbeispiel nach

Fig.1, Bestandteil einer Sägestation sein. Die Sägeeinrichtung 1 nach Fig. 2a weist ein Sägeblatt 1.1 und eine Schutzvorrichtung 2 auf. Die Schutzvorrichtung 2 umfasst ein feststehendes Gehäuse 2.2 und einen beweglichen Teil 2.1, welcher sich um das Sägeblatt 1.1 zumindest teilweise erstrecken. Der bewegliche Teil 2.1 ist wie im Ausführungsbeispiel nach Fig. 1 derart um das feststehende Gehäuse verlagerbar, dass das Sägeblatt für eine Bearbeitung eines Werkstücks 8 freigebbar ist. Sofern kein Werkstück zum Bearbeiten vorliegt, ist der bewegliche Teil 2.1 in einer geschlossenen Stellung derart um das Sägeblatt 1.1 angeordnet, dass das feststehende Gehäuse 2.2 und der bewegliche Teil 2.1 der Schutzvorrichtung 2 zumindest annähernd das gesamte Sägeblatt 1.1 einhausen. Hierfür ist der bewegliche Teil 2.1 mit Hilfe einer Feder 2.4 derart vorgespannt, dass der bewegliche Teil 2.1 in der geschlossenen Stellung verbleibt. Der bewegliche Teil 2.1 kann mit Hilfe einer im Ausführungsbeispiel nach Fig. 2a nicht dargestellten Hilfseinrichtung derart um das feststehende Gehäuse 2.2 bewegt werden, dass das Sägeblatt 1.1 freigegeben wird. Hierbei soll der Bereich des Sägeblatts 1.1 freigegeben werden, der für die Bearbeitung eines Werkstücks 8 benötigt wird. Hierfür ist an dem zum Werkstück gerichteten Teil des beweglichen Teils 2.1 eine Rolle 2.5.2 angeordnet. Die Rolle 2.5.2 ist im vorliegenden Ausführungsbeispiel als Kunststoffrolle ausgebildet und ist zu den Seitenflanken abgerundet. Die Rolle 2.5.2 legt sich am zu bearbeitenden Werkstück 8 an, um sicherzustellen, dass der bewegliche Teil 2.1 der Schutzvorrichtung 2 nur den Teil des Sägeblatts 1.1 freigibt, der zu Bearbeitung des Werkstücks 8 notwendig ist.

Ferner weist die Sägeeinrichtung 1 gem. Fig. 2a ein Schutzblech 2.6 auf. Dieses Schutzblech 2.6 ist gegenüber dem freiliegenden Sägeblatt 1.1 angeordnet. Zwischen dem Schutzblech 2.6 und dem Sägeblatt 1.1 kann ein zu bearbeitendes Werkstück 8 eingeführt sein. Das Schutzblech 2.6 dient dazu einen Bediener vor dem für die Bearbeitung freiliegenden Sägeblattabschnitt bestmöglich zu schützen. Das Schutzblech 2.6 weist hierfür einen beweglichen Schutzblechteil 2.6.1 auf, welcher an einer Schutzblechführungseinheit 2.6.3 verlagerbar angeordnet ist. Der bewegliche Schutzblechteil 2.6.1 weist an den Rändern Seitenwangen 2.6.2 auf, welche sich in Richtung des Sägeblatts 1.1 erstrecken. Hiermit soll der Schutz eines Bedieners vor dem Sägeblatt 1.1 zudem erhöht werden. Durch die Anordnung des beweglichen Schutzblechteils 2.6.1 an der Schutzblechführungseinheit 2.6.3 kann die Höhe des beweglichen Schutzblechteils 2.6.1 variiert werden. Hiermit ist es möglich, dass die Höhe des beweglichen Schutzblechteils 2.6.1 in Abhängigkeit des freigegebenen Sägeblattabschnitts variiert.

Um das Werkstück 8 für einen Sägeschnitt in der Sägeeinrichtung 1 ordnungsgemäß auszurichten, wird das Werkstück 8 auf der Auflagefläche 5.1 dem Sägeblatt zugeführt und am Ausrichtelement 5.3 für den Schnitt positioniert.

Das Ausführungsbeispiel nach Fig. 2b zeigt eine Sägeeinrichtung 1 in einer dreidimensionalen Detailansicht. Die Sägeeinrichtung 1 weist ein Sägeblatt 1.1 und eine Schutzvorrichtung 2 auf, welche identisch der Schutzvorrichtung nach dem Ausführungsbeispiel nach Fig. 2a ist. Ferner weist die Sägeeinrichtung 1 ein Schutzblech 2.6 auf. Das Schutzblech 2.6 umfasst einen beweglichen Schutzblechteil 2.6.1, welcher an beiden lateralen Enden jeweils eine zum Sägeblatt erstreckende Seitenwange 2.6.2 aufweist. Ferner weist das Schutzblech eine Schutzblechführungseinheit 2.6.3 auf, um das bewegliche Schutzblechteil 2.6.1 in der ersten Richtung verlagern zu können. Die Verlagerung wird vorzugsweise mit Hilfe einer nicht dargestellten Antriebseinheit durchgeführt. Die Antriebseinheit kann als Elektromotor ausgebildet sein. Hierdurch ist eine sehr exakte Einstellung der Position in der ersten Richtung des beweglichen Schutzblechteils 2.6.1 möglich. Um die ordnungsgemäße Position in der ersten Richtung des beweglichen Schutzblechteils 2.6.1 einzustellen, kann eine nicht dargestellte Steuereinheit vorgesehen sein, welche anhand von vorgegebenen oder ermittelten Informationen des zu bearbeitenden Werkstücks 8 die Antriebseinheit derart ansteuert, dass das bewegliche Schutzblechteil 2.6.1 verlagert wird. Ebenfalls ist eine Ansteuerung der Antriebseinheit für die Verlagerung des beweglichen Schutzblechteils 2.6.1 in Abhängigkeit des Schwenkwinkels des beweglichen Teils 2.1 der Schutzvorrichtung 2 der Sägeeinrichtung 1 möglich.

Die Sägeeinrichtung 1 nach dem Ausführungsbeispiel der Fig. 2b weist ferner eine Schwenkeinrichtung 2.6.4 des beweglichen Schutzblechteils 2.6.1 auf. Die Schwenkeinrichtung 2.6.4 umfasst eine Mimik in Form einer halbkreisförmigen Aussparung und einen in der halbkreisförmigen Aussparung verlagerbar angeordneten Schwenkzapfen. Der Schwenkzapfen ist mit dem beweglichen Schutzblechteil 2.6.1 verbunden. Bei einer Verlagerung des Schwenkzapfens wird dieser in der Mimik derart geführt, dass das bewegliche Schutzblechteil 2.6.1 geführt verlagert werden kann. Vorzugsweise ist der Schwenkzapfen mit einer nicht dargestellten Schwenkeinheit des Sägeblattes 1.1 verbunden. Mit Hilfe der Kopplung des Schwenkzapfens der Schwenkeinrichtung 2.6.4 des Schutzblechs 2.6 kann gewährleistet werden, dass das Schutzblech 2.6 mit dem Sägeblatt 1.1 geschwenkt wird. Hiermit kann ein bestmöglicher Schutz für einen Bediener, auch bei geschwenktem Sägeblatt 1.1 gewährleistet werden.

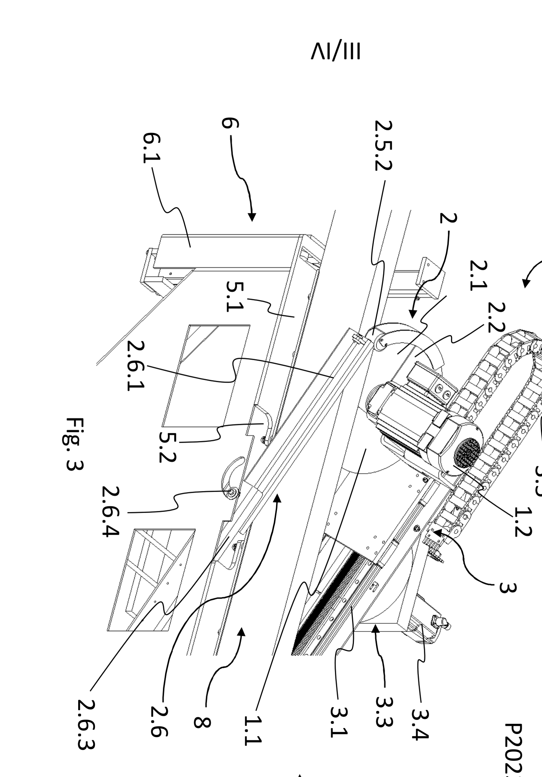

In Fig.3 ist eine dritte Detailansicht einer geschwenkten erfindungsgemäßen Sägeeinrichtung 1 dargestellt, welche ein Teil einer Sägestation 4 ist. Die Sägeeinrichtung 1 weist ein Sägeblatt 1.1 und eine erste Antriebseinheit 1.2 auf, um das Sägeblatt 1.1 anzutreiben. Zudem weist die Sägeeinrichtung 1 eine Schutzvorrichtung 2 auf, um einen Bediener vor dem Sägeblatt 1.1 zu schützen. Die Schutzvorrichtung 2 hat ein feststehendes Gehäuse 2.2 und einen um das feststehende Gehäuse 2.2 verlagerbaren beweglichen Teil 2.1. Ferner weist die Schutzvorrichtung eine nicht dargestellte Hilfseinrichtung 2.5 auf, um den beweglichen Teil 2.1 um das feststehende Gehäuse 2.2 zu bewegen. Der bewegliche Teil 2.1 weist im Kontaktbereich zum Werkstück 8 eine Rolle 2.5.2 auf. Der Schutzvorrichtung 2 weist ferner ein Schutzblech 2.6 auf, um einen Bediener vor dem Sägeblatt 1.1 zu schützen. Das Sägeblatt 1.1 ist an einer Halterung 3 der Sägestation 3 angeordnet. Die Halterung 3 weist eine Führungseinheit 3.1 auf, um das Sägeblatt 1.1 in der ersten Richtung translatorisch zu verlagern. Die Verlagerung in der ersten Richtung wird durch einen nicht dargestellten ersten Stellantrieb realisiert. Durch die Verwendung eines ersten Stellantriebs kann eine exakte Positionierung des Sägeblatts erfolgen. Bei einer Verlagerung des Sägeblatts 1.1 in der ersten Richtung kann zeitgleich oder zumindest in zeitlicher Nähe der bewegliche Schutzblechteil 2.6.1 mit Hilfe der Schutzblechführungseinheit 2.6.3 derart in der ersten Richtung verlagert werden, dass ein Bediener vor dem Sägeblatt 1.1 geschützt ist. Vorzugsweise ist die Verlagerung des beweglichen Schutzblechteils 2.6.1 derart mit der Verlagerung des Sägeblatts 1.1 abgestimmt, dass das bewegliche Schutzblechteil 2.6.1 und das Sägeblatt 1.1 auf die gleiche Position in der ersten Richtung verlagert werden. Ferner weist die Halterung 3 eine Schwenkeinheit 3.3 auf, um das Sägeblatt 1.1 in einem Winkelbereich von ±85° zu verlagern. Für spezielle Anwendungen kann das Sägeblatt 1.1 mit Hilfe der Schwenkeinheit 3.3 vorzugsweise in einem Winkelbereich von ±65° verlagert werden. Für die Verlagerung ist an der Schwenkeinheit 3.3 ein zweiter Stellantrieb 3.2 angeordnet. Der zweite Stellantrieb 3.2 wird über eine nicht dargestellte Steuereinheit entsprechend eines vordefinierten Schnittplans angesteuert. Hierdurch kann das Sägeblatt 1.1 entsprechend dem Schnittplan in die entsprechende Winkellage verlagert werden. Um die erste Antriebseinheit 1.2 auch bei einer Verlagerung des Sägeblatts 1.1 an eine Steuereinheit und/oder mit einem Stromversorger verbinden zu können, weist die Halterung 3 eine flexible Kabelführung 3.5 auf. Die Kabelführung 3.5 umfasst einzelne zueinander bewegliche Elemente, um bei einer Verlagerung die darin geführten Kabel weder einzuklemmen noch zu überdehnen. Hiermit kann ein Kabelbruch der Versorgungskabel verhindert werden.

Die Sägestation 4 nach dem Ausführungsbeispiel gemäß Fig.3 weist neben der Sägeeinrichtung 1 einen Sägetisch 5 auf. Vorliegend ist die Sägeeinrichtung 1 am Sägetisch 5 befestigt. In einer nicht dargestellten alternativen Ausgestaltung kann die Sägeeinrichtung 1 auf einem Podest oder am Boden neben dem Sägetisch 5 derart angeordnet sein, dass die Sägeeinrichtung 1 ein Werkstück 8, welches sich auf dem Sägetisch 5 befindet, bearbeiten kann. Der Sägetisch 5 weist eine Auflagefläche 5.1 für ein Werkstück 8 auf. In einer Ausgestaltung der Auflagefläche 5.1 kann diese Rollen oder Gleitelemente aufweisen, um eine Bewegung des Werkstücks 8 auf der Auflagefläche 5.1 zu vereinfachen. Vorzugsweise sind die Gleitelemente austauschbar an der Auflagefläche 5.1 angeordnet und bestehen aus einem Kunststoff. Die Auflagefläche 5.1 weist im Bearbeitungsbereich der Sägeeinrichtung 1 eine Aussparung 5.2 auf. Die Aussparung 5.2 ist derart gestaltet, dass für einen Sägeschnitt das Sägeblatt 1.1 in die Aussparung 5.2 eingreifen kann, ohne dass das Sägeblatt mit der Auflagefläche 5.1 in Kontakt kommt. Hierdurch kann eine ordnungsgemäße Bearbeitung eines Werkstücks 8 durchgeführt werden, ohne dass das Sägeblatt 1.1 und/oder die Auflagefläche 5.1 des Sägetisches 5 beschädigt werden. Der Sägetisch 5 ist vorliegend an einem Stützrahmen 6 angeordnet. Der Stützrahmen 6 weist Stützfüße 6.1 auf, um den Stützrahmen 6 am Boden zu befestigen. Die Stützfüße sind im vorliegenden Ausführungsbeispiel in der Höhe einstellbar, um den Sägetisch 5 auszurichten.

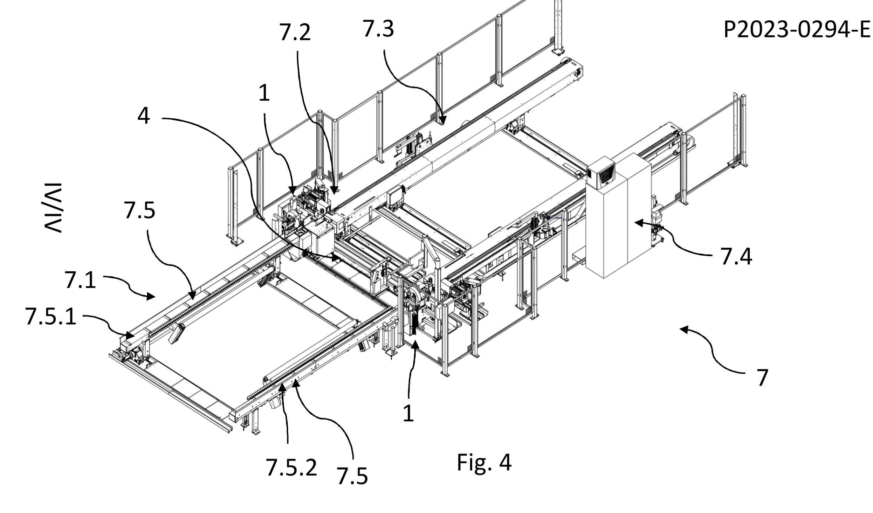

In Fig. 4 ist eine Bearbeitungsvorrichtung in Form einer Riegelwerkstation 7 mit einer erfindungsgemäßen Sägestation 4 umfassend zwei Sägeeinrichtungen 1 dargestellt. Die Riegelwerkstation 7 weist ferner eine Befestigungseinheit 7.2, einen Entnahmetisch 7.3 und eine Steuereinheit 7.4 auf. Die Riegelwerkstation 7 ist dazu eingerichtet, aus Werkstücken, vorzugsweise aus Vierkantwerkstücken bestehend aus Holz oder einem Holzverbundwerkstoff, eine Tragstruktur für beispielsweise ein Gebäude herzustellen.

Üblicherweise besteht eine Tragstruktur aus zwei zumindest annähernd parallelen Werkstücken, den sogenannten Tragstrukturbalken, welche auch als Ober- und Untergurt bezeichnet werden. In den Raum zwischen dem Ober- und Untergurt werden weitere Werkstücke, die sogenannten Stiele eingesetzt. Die Stiele werden zumindest annähernd orthogonal zu den lateralen Flächen des Ober- und/oder Untergurts eingebracht, wobei die jeweiligen Stiele zueinander in einem vordefinierten Abstand angeordnet werden. Die Riegelwerkstation 7 weist hierfür einen Zuführtisch 7.1 auf. Der Zuführtisch 7.1 ist dazu eingerichtet den Ober- und Untergurt der entsprechenden Sägeeinrichtung 1 zuzuführen. Hierfür weist der Zuführtisch 7.1 eine erste Fördereinrichtung 7.5, umfassend ein erstes und zweites Fördersegment 7.5.1, 7.5.2, auf. Das erste Fördersegment 7.5.1 ist dazu eingerichtet den Obergurt zu bewegen. Das zweite Fördersegment 7.5.2 ist dazu eingerichtet den Untergurt zu bewegen. In einer Variante kann das erste und/oder zweite Fördersegment 7.5.1, 7.5.2 als Kettenförderer ausgebildet sein, um die Werkstücke zu bewegen. Kettenförderer sind besonders geeignet einen Ober- und/oder Untergurt zu befördern, da diese besonders robust ausgebildet sind und schwere Bauteile präzise bewegen können. Nach der Zuführung des Ober- und Untergurts werden der Ober- und Untergurt mit Hilfe der Sägeeinrichtungen 1 auf eine vordefinierte Länge für die herzustellende Tragstruktur aufgeteilt, insbesondere gekürzt. Vorzugsweise können der Ober- und Untergurt auch in einem vordefinierten Winkel, vorzugsweise in einem Winkelbereich von bis zu ±85° gekürzt werden, indem das entsprechende Sägeblatt der jeweiligen Sägeeinrichtung 1 im entsprechenden Winkel geschwenkt wird. Hierdurch ist es möglich Tragstrukturen für Eckverbindungen und/oder Dachschrägen herzustellen. Die Sägeeinrichtungen 1 weisen jeweils eine nicht näher dargestellte Schutzvorrichtung entsprechend den Ausführungen nach Fig.1 bis Fig.3 auf, um einen Bediener, welcher sich für die Bedienung der Riegelwerkstation 7 im Bereich der Sägestation 4 befindet, vor den Sägeblättern der Sägeeinrichtungen 1 zu schützen.

In Werkstückförderrichtung ist der Sägestation 4 nachgelagert eine Befestigungseinheit 7.2 angeordnet. Im Bereich der Befestigungseinheit 7.2 werden von einem nicht dargestellten Bediener oder einem Manipulator die nicht dargestellten Stiele in den Raum zwischen dem Ober- und Untergurt eingebracht und mittels der Befestigungseinheit 7.2 mit dem Ober- und Untergurt verbunden. Hierfür werden der Ober- und Untergurt mit Hilfe der ersten Fördereinrichtung sequenziell in Werkstückförderrichtung derart bewegt, dass der vordefinierte Abstand der eingebrachten Stiele zueinander eingehalten wird. Die Befestigungseinheit 7.2 weist in einer Variante zwei Nagelstationen auf, wobei eine Nagelstation auf der Seite des Obergurtes und die weitere Nagelstation auf der Seite des Untergurtes derart angeordnet ist, dass die jeweilige Nagelstation einen Nagel durch den Ober- oder Untergurt in den zwischen dem Oberund Untergurt angeordneten Stiel einbringen kann.

Durch das sequenzielle Bewegen des Ober- und Untergurts in Verbindung mit dem sequenziellen Einlegen und Befestigen der Stiele wird sequenziell die Tragstruktur hergestellt und auf den Entnahmetisch 7.4 befördert. Der Entnahmetisch 7.4 weist in einer Variante eine weitere Fördereinrichtung in Form von nicht dargestellten Rollen auf. In einer alternativen Variante weist der Entnahmetisch eine annähernd plane Oberfläche auf. Die plane Oberfläche kann vorzugsweise eine zusätzliche Gleitschicht, insbesondere eine austauschbare Gleitschicht aufweisen. Als Gleitschicht kommt vorliegend eine Kunststoffschicht in Betracht, welche an der planen Oberfläche, vorzugsweise mit Hilfe von Schrauben, befestigt sein kann. Zusätzlich kann der Entnahmetisch 7.4 eine nicht dargestellte verlagerbare Stoppeinrichtung aufweisen. Die Stoppeinrichtung ist in einer Variante in Form eines Anschlagstiftes ausgebildet. Der Anschlagstift ist mit Hilfe eines nicht dargestellten Schienensystems verlagerbar. Das Schienensystem ist vorzugsweise an einer lateralen Fläche des Entnahmetisches angeordnet.

Ferner weist die Riegelwerkstation 7 eine Steuereinheit 7.4 auf. Diese dient dazu die einzelnen Einrichtungen und Einheiten der Riegelwerkstation 7 anzusteuern. Die Steuereinheit 7.4 ist ferner derart eingerichtet die Sägeeinrichtungen 1 derart anzusteuern, dass eine Bearbeitung des Ober- und Untergurts zumindest nahezu zeitgleich erfolgt.

In einer weiteren Ausführungsform der Sägeeinrichtung 1 weist die Schutzvorrichtung 2 eine Feder 2.4 auf, wobei die Feder 2.4 den beweglichen Teil 2.1 gegen ein zu bearbeitendes Werkstück 8 drückt, wobei die Feder 2.4 vorzugsweise als Torsionsfeder ausgebildet ist und am Drehpunkt des beweglichen Teils 2.1 angeordnet ist.

In einer weiteren Ausführungsform der Sägeeinrichtung 1 weist die Sägeeinrichtung 1 eine Führungseinheit 3.1 zum Verlagern des Sägeblatts 1.1 auf, wobei die Führungseinheit 3.1 einen ersten Stellantrieb, insbesondere einen ersten Elektrostellmotor, zum Verlagern des Sägeblatts 1.1 aufweist.

In einer weiteren Ausführungsform der Sägeeinrichtung 1 umfasst die Sägeeinrichtung 1 eine Steuereinheit, die den ersten Stellantrieb 3.2 derart ansteuert, dass die Verlagerung des Sägeblatts 1.1 erfolgt, wobei insbesondere die Steuereinheit in Abhängigkeit eines Schnittplans den ersten Stellantrieb 3.2 ansteuert, um das Sägeblatt 1.1 zu positionieren und zu bewegen.

### BEZUGSZEICHENLISTE

- 1: Sägeeinrichtung
- 1.1: Sägeblatt
- 1.2: Erste Antriebseinheit
- 2.: Schutzvorrichtung
- 2.1: Beweglicher Teil
- 2.2: Feststehendes Gehäuse
- 2.3: Anschlag
- 2.4: Feder
- 2.5: Hilfseinrichtung
- 2.5.1: Seilzug
- 2.5.2: Rolle
- 2.6: Schutzblech
- 2.6.1: Beweglicher Schutzblechteil
- 2.6.2: Seitenwangen
- 2.6.3: Schutzblechführungseinheit
- 2.6.4: Schwenkeinrichtung Schutzblech
- 3: Halterung
- 3.1: Führungseinheit
- 3.2: Erster Stellantrieb
- 3.3: Schwenkeinheit
- 3.4: zweiter Stellantrieb
- 3.5: Kabelführung
- 4: Sägestation
- 5: Sägetisch
- 5.1: Auflagefläche
- 5.2: Aussparung
- 5.3: Ausrichteelement
- 5.3.1: Ausrichtefläche
- 5.4: Förderrolle
- 6: Stützrahmen
- 6.1: Stützfüße
- 7: Riegelwerkstation
- 7.1: Zuführtisch
- 7.2: Befestigungseinheit
- 7.3: Entnahmetisch
- 7.4: Steuereinheit
- 7.5: Erste Fördereinrichtung
- 7.5.1: Erstes Fördersegment
- 7.5.2: Zweites Fördersegment
- 8: Werkstück

## Patentansprüche

1. Sägeeinrichtung (1) zum Aufteilen eines Werkstücks (8), insbesondere eines Holzwerkstücks, aufweisend ein Sägeblatt (1.1), eine erste Antriebseinheit (1.2), um das Sägeblatt (1.1) in Rotation zu versetzen, insbesondere einen ersten Elektromotor, und eine Schutzvorrichtung (2), wobei die Schutzvorrichtung (2) zumindest abschnittsweise derart um den Umfang des Sägeblatts (1.1) angeordnet ist, dass ein sich neben der Sägeeinrichtung (1) befindender Bediener vor dem rotierenden Sägeblatt (1.1) schützbar ist, wobei die Schutzvorrichtung (2) einen beweglichen Teil (2.1) umfasst, wobei der bewegliche Teil (2.1) derart um den Drehpunkt des Sägeblatts (1.1) schwenkbar angeordnet ist, dass durch das Einführen des Werkstücks (8) in die Sägeeinrichtung (1) für einen Aufteilvorgang der bewegliche Teil (2.1) derart verschwenkt wird, so dass ein Angreifen des rotierenden Sägeblatts (1.1) am Werkstück (8) ermöglicht wird.

2. Sägeeinrichtung (1) nach Anspruch 1, wobei die Schutzvorrichtung (2) ein feststehendes Gehäuse (2.2) aufweist, wobei der bewegliche Teil (2.1) zumindest abschnittsweise um das feststehende Gehäuse (2.2) oder zwischen dem Sägeblatt (1.1) und dem feststehenden Gehäuse (2.2) schwenkbar angeordnet ist, insbesondere entgegen der Drehrichtung des Sägeblatts (1.1) schwenkbar ist.

3. Sägeeinrichtung (1) nach einem der vorherigen Ansprüche, wobei der bewegliche Teil (2.1) einen Anschlag (2.3) aufweist und derart in der Sägeeinrichtung (1) angeordnet ist, dass der Anschlag (2.3) an dem zu bearbeitenden Werkstück (8) in Anlage kommt, wenn das Werkstück (8) in die Sägeeinrichtung (1) eingebracht wird, wobei der bewegliche Teil (2.1) durch das Werkstück (8) derart bewegbar ist, dass die Sägeeinrichtung (1) für den Aufteilvorgang freigegeben wird, wobei der Anschlag (2.3) als Kunststoffrolle ausgeführt ist, wobei die Kunststoffrolle drehbar gelagert am beweglichen Teil (2.1) derart angeordnet ist, dass ein in die Sägeeinrichtung (1) eingebrachtes Werkstück (8) an der Kunststoffrolle anliegt und daran entlang führbar ist, wobei das Einbringen des Werkstücks (8) vorzugsweise in einer Hauptförderrichtung des zu bearbeitenden Werkstücks (8) erfolgt, wobei die Kunststoffrolle aus einem vordefinierten elastischen Material, insbesondere aus Polyoxymethylen, besteht, so dass ein gleichmäßiges Bewegen des beweglichen Teils (2.1) realisiert wird, wobei die Kunststoffrolle derart ausgeformt ist, insbesondere auf beiden Seiten derart abgerundet ist, dass die Kunststoffrolle bei allen Winkellagen des Sägeblatts (1.1) am Werkstück (8) anliegt.

4. Sägeeinrichtung (1) nach Anspruch 3, wobei der bewegliche Teil (2.1) eine Hilfseinrichtung (2.5) aufweist, wobei die Hilfseinrichtung (2.5) die Bewegung des beweglichen Teils (2.1) unterstützt, wobei die Hilfseinrichtung (2.5) vorzugsweise einen Seilzug (2.5.1) und eine Aufwickeleinheit umfasst, wobei die Aufwickeleinheit vorzugsweise federvorgespannt ist.

5. Sägeeinrichtung (1) nach einem der vorherigen Ansprüche, wobei das Sägeblatt (1.1) in einer ersten Richtung verlagerbar ist, wobei die erste Richtung orthogonal zu einer Sägelinie in einer Hochachse und orthogonal zu einer Hauptförderrichtung des zu bearbeitenden Werkstücks (8) ist, wobei die Sägeeinrichtung (1) eine Schwenkeinheit (3.3) aufweist, wobei die Schwenkeinheit (3.3) derart eingerichtet ist, dass das Sägeblatt (1.1) in einem Winkelbereich von ±85°, insbesondere ±65°, in Bezug zur ersten Richtung in Richtung der Hauptförderrichtung oder in Richtung der Sägelinie schwenkbar ist, wobei insbesondere die Schwenkeinheit (3.3) für einen Aufteilvorgang arretierbar ist

6. Sägeeinrichtung (1) nach einem der vorherigen Ansprüche, wobei die Schutzvorrichtung (2) ein Schutzblech (2.6) aufweist, wobei das Schutzblech (2.6) gegenüber dem freiliegenden Teil des Sägeblatts (1.1) angeordnet ist, wobei das Schutzbleich (2.6) derart an der Sägeeinrichtung(1), insbesondere an der Schwenkeinheit (3.3), angeordnet ist, dass zwischen dem Schutzblech (2.6) und dem Sägeblatt (1.1) das zu bearbeitende Werkstück (8) positionierbar ist, wobei das Schutzblech (2.6) bei einer Verlagerung und/oder Schwenkung des Sägeblatts (1.1) mit verlagert und/oder mit geschwenkt wird.

7. Sägestation (4) aufweisend eine Sägeeinrichtung, insbesondere eine Sägeeinrichtung (1) nach einem der vorherigen Ansprüche, und einen Sägetisch (5) mit einer Auflagefläche (5.1), auf welchem ein zu bearbeitendes Werkstück (8) auflegbar ist, wobei die Auflagefläche (5.1) eine Aussparung (5.2) aufweist, wobei die Aussparung (5.2) derart ausgestaltet ist, dass ein Sägeblatt (1.1) der Sägeeinrichtung (1) in einem Winkelbereich von ±85°, vorzugsweise ±65° in Bezug zu einer ersten Richtung, die orthogonal zu einer Sägelinie in einer Hochachse und orthogonal zu einer Hauptförderrichtung des zu bearbeitenden Werkstücks (8) ist, in der Aussparung (5.2) verlagerbar ist.

8. Sägestation (4) nach Anspruch 7, wobei die Sägestation (4) ein Sägeblatt (1.1), eine Steuereinheit und einen Stellantrieb (3.2) umfasst, wobei die Steuereinheit den ersten Stellantrieb (3.2) derart ansteuert, dass eine Verlagerung des Sägeblatts (1.1) in der ersten Richtung erfolgt, wobei insbesondere die Steuereinheit in Abhängigkeit eines Schnittplans den ersten Stellantrieb (3.2) ansteuert, um das Sägeblatt (1.1) zu positionieren und zu bewegen.

9. Riegelwerkstation (7) zur Herstellung einer Tragstruktur für Gebäudewände aus Werkstücken (8), insbesondere aus Holzwerkstücken, aufweisend einen Zuführtisch (7.1) mit vorzugsweise einer ersten Fördereinrichtung (7.5), eine Sägestation, insbesondere eine Sägestation (4) nach einem der Ansprüche 12 oder 13, einen Entnahmetisch (7.3) mit vorzugsweise einer weiteren Fördereinrichtung, eine Befestigungseinheit (7.2) und eine Steuereinheit (7.4), wobei die Sägestation (4) in einer Werkstückförderrichtung derart zwischen dem Zuführtisch (7.1) und dem Entnahmetisch (7.3) im Bereich der Befestigungseinheit (7.2) angeordnet ist, dass ein Werkstück (8) mittels der Sägestation für die herzustellende Tragstruktur aufteilbar, insbesondere kürzbar, ist und mittels der Befestigungseinheit (7.2) an der Tragstruktur befestigbar ist.

10. Riegelwerkstation (7) nach Anspruch 9, wobei die erste Fördereinrichtung (7.5) zwei Fördersegmente (7.5.1, 7.5.2) aufweist, um zwei Werkstücke (8) zumindest nahezu parallel zueinander zur Sägestation zu befördern, wobei die Sägestation zwei Sägeeinrichtungen aufweist, insbesondere zwei Sägeeinrichtungen (1) nach den Ansprüchen 1 bis 11, wobei die Sägeeinrichtungen an oder zumindest derart im Bereich der zwei Fördersegmente (7.5.1, 7.5.2) angeordnet sind, dass eine Bearbeitung der zwei Werkstücke (8) durchführbar ist, wobei die Sägeeinrichtungen von der Steuereinheit (7.4) derart ansteuerbar sind, dass eine Bearbeitung der beiden Werkstücke (8) zumindest nahezu zeitgleich erfolgt.

11. Riegelwerkstation (7) nach Anspruch 9 oder 10, wobei die Sägestation ein Sägeblatt (1.1) und einen Stellantrieb (3.2) umfasst, wobei die Steuereinheit (7.4) den ersten Stellantrieb (3.2) derart ansteuert, dass eine Verlagerung des Sägeblatts (1.1) in einer ersten Richtung erfolgt, wobei die erste Richtung orthogonal zu einer Sägelinie der Riegelwerkstation (7) in einer Hochachse und orthogonal zu einer Hauptförderrichtung des zu bearbeitenden Werkstücks (8) ist, wobei insbesondere die Steuereinheit in Abhängigkeit eines Schnittplans den ersten Stellantrieb (3.2) ansteuert, um das Sägeblatt (1.1) zu positionieren und zu bewegen.

12. Verwendung einer Sägeeinrichtung (1), insbesondere nach einem der Ansprüche 1 bis 11, wobei ein Bediener einen Sägeplan für ein zu bearbeitendes Werkstück (8) in eine Steuereinheit (7.4) einliest, mittels der Steuereinheit (7.4) erstellt und/oder mittels der Steuereinheit (7.4) auswählt und anschließend an der Sägeeinrichtung (1) eine Bearbeitungsvorgang startet, indem der Bediener mindestens zwei Aktivierungstasten, insbesondere zwei Zweihandaktivierungstasten, betätigt, wobei die Aktivierungstasten während des Bearbeitungsvorgangs betätigt bleiben müssen.

13. Verfahren zum Betreiben einer Sägeeinrichtung, insbesondere einer Sägeeinrichtung (1) nach einem der Ansprüche 1 bis 11, aufweisend die folgenden Schritte:
- Versetzen eines Sägeblatts (1.1) in Rotation zum Aufteilen eines Werkstücks (8), insbesondere eines Holzwerkstücks,
- Einführen des Werkstücks (8) in die Sägeeinrichtung,
- Schwenken eines beweglichen Teils einer Schutzvorrichtung (2) der Sägeeinrichtung durch das Einführen des Werkstücks (8) um einen Drehpunkt des Sägeblatts (1.1), so dass das rotierende Sägeblatt (1.1) für einen Aufteilvorgang an dem Werkstück (8) angreifen kann.

14. Verfahren nach Anspruch 13, ferner aufweisend die folgenden Schritte:
- Bereitstellung von Informationen zu den zu bearbeitenden Werkstücken (8) in einer Steuereinheit (7.4),
- Erstellen eines Sägeplans in der Steuereinheit (7.4) auf Basis der bereitgestellten Informationen,
- Starten der Sägeeinrichtung,
- Ansteuern der Sägeeinrichtung in Abhängigkeit des Sägeplans,
- wobei das Sägeblatt (1.1) der Sägeeinrichtung in Abhängigkeit des Sägeplans um einen vorgegebenen Winkel in Bezug auf eine erste Richtung, die orthogonal zu einer Sägelinie der Sägeeinrichtung in einer Hochachse und orthogonal zu einer Hauptförderrichtung des zu bearbeitenden Werkstücks (8) ist, teilautomatisch oder vollautomatisch verlagert und/oder geschwenkt wird.

15. Verfahren nach Anspruch 13 oder 14, wobei die Schutzvorrichtung (2) in Abhängigkeit einer Verlagerung und/oder einer Schwenkung des Sägeblatts (1.1) mit dem Sägeblatt (1.1) verlagert und/oder geschwenkt wird.
